# EUROPEAN PATENT SPECIFICATION

(11) **EP 4 411 460 B1**
(45) Date of publication and mention of the grant of the patent: **08.07.2026**
(21) Application number: 22878430.2
(22) Date of filing: 29.09.2022
(51) Int. Cl.: G02C 7/00, C09K 3/18, G02B 1/10, C08G 18/58, C08G 18/62, C08G 18/78, C08L 75/04, C09D 175/04, C09D 183/06, G02B 1/14, G02B 1/18, G02C 7/02, C08G 77/26, C08G 77/28

(54) **ANTI-FOGGING PLASTIC SPECTACLE LENS**
BESCHLAGVERHINDERNDES BRILLENGLAS AUS KUNSTSTOFF
LENTILLE DE LUNETTES EN PLASTIQUE ANTIBUÉE

(30) Priority: 06.10.2021 JP 2021164985
(43) Date of publication of application: 07.08.2024
(73) Proprietor: Tokai Optical Co., Ltd., Okazaki-shi, Aichi 444-2192 (JP)
(72) Inventor: SUZUKI Hiroko, Aza-shimoda, Eta-cho, Okazaki-shi, Aichi 444-2192 (JP)
(74) Representative: Prüfer & Partner mbB Patentanwälte · Rechtsanwälte
(86) International application number: PCT/JP2022/036546
(87) International publication number: WO 2023/058561

(56) References cited:
- WO-A1-2013/005710
- WO-A1-2017/047524
- WO-A1-2019/159974
- JP-A- 2015 030 803
- JP-A- 2019 094 468
- JP-A- H05 112 583
- JP-B1- 6 340 539
- US-A- 3 488 215

## Description

### TECHNICAL FIELD

The present invention relates to an anti-fogging plastic spectacle lens which is a spectacle lens having a base material made of plastic and provided with anti-fogging capacity (including non-prescription spectacle lens and sunglass lens). The invention is set out in the appended set of claims.

### BACKGROUND ART

As a coating composition that can form a cured film having an anti-fogging property as a property of suppressing fogging on a surface of an article, a product disclosed in JP 6340539 B has been known. The coating composition contains a (meth)acrylic-based resin (A) having respective constituent units (a-1) to (a-4) derived from four monomers, a polyol compound (B), and a polyfunctional isocyanate compound (C), each within a predetermined range of mass%.

The coating composition is composed as described below. That is, the constituent unit (a-1) of (A) has an amide group, and therefore easily holds moisture and easily absorbs moisture. (C) undergoes cross-linking reaction with (A) to contribute to the formation of a cured film. If a cross-linking density of (a-1) is too high after curing, a gap for moisture to enter decreases, making it difficult to absorb the moisture. Therefore, (B) is added as a cross-linking auxiliary agent, thereby providing a gap for moisture absorption while maintaining the required cross-linking density. The constituent unit (a-2) of (A) has a polycaprolactone structure, which has a flexible chemical skeleton, and therefore improves flexibility and elasticity of the cured film and improves abrasion resistance of the cured film. The constituent unit (a-4) of (A) has a polydimethylsiloxane chain, and therefore improves slipperiness of the cured film and improves the abrasion resistance of the cured film. The constituent unit (a-3) of (A) is a hydroxyalkyl (meth)acrylate, which is harder than (a-2) in the cured film, and therefore adjusts the flexibility mainly brought about by (a-2) to balance the flexibility with the elasticity.

### SUMMARY OF THE INVENTION

### PROBLEMS TO BE SOLVED BY THE INVENTION

Although the cured film formed by the above-described coating composition has the anti-fogging property by absorbing moisture, there is room for improvement in the abrasion resistance and the slipperiness.

In particular, for the slipperiness, there is room for improvement in both gripping performance (low coefficient of static friction and low resistance when a finger and the like in a stationary state starts to move) and dynamic slipperiness (low coefficient of dynamic friction and low resistance to a moving finger and the like).

A main object of the present invention is to provide an anti-fogging plastic spectacle lens having improved abrasion resistance and slipperiness.

### SOLUTION TO THE PROBLEMS

In order to achieve the above-described object, the invention described in a first aspect has a configuration for carrying out the invention in which an anti-fogging plastic spectacle lens including a water absorbent layer obtained from a composition. The composition contains: a (meth)acrylic-based resin (A), a polyfunctional isocyanate compound (B) and an epoxide (C). The (meth)acrylic-based resin (A) has a constituent unit derived from a monomer (a-1) represented by chemical formula (1) in paragraph [0014], a constituent unit derived from a monomer (a-2) represented by chemical formula (2) in paragraph [0015], a constituent unit derived from a hydroxyalkyl (meth)acrylate (a-3), and a constituent unit derived from a monomer (a-4) represented by chemical formula (3) in paragraph [0016]. The epoxide (C) as an organic compound has a plurality of epoxy groups. A proportion of the constituent unit derived from the monomer (a-1) is 20 mass% or more and 65 mass% or less, a proportion of the constituent unit derived from the monomer (a-2) is 10 mass% or more and 40 mass% or less, and a proportion of the constituent unit derived from the monomer (a-4) is 1 mass% or more and 10 mass% or less relative to 100 mass% of all constituent units in the (meth)acrylic-based resin (A).

In the invention described in a second aspect, which is in the above-described invention, a proportion of the polyfunctional isocyanate compound (B) is 5 parts by mass or more and 100 parts by mass or less relative to 100 parts by mass of the (meth)acrylic-based resin (A).

In the invention described in a third aspect, which is in the above-described inventions, the epoxide (C) is 1 part by mass or more and 10 parts by mass or less relative to 100 parts by mass of a combination of the (meth)acrylic-based resin (A) and the polyfunctional isocyanate compound (B).

In the invention described in a fourth aspect, which is in the above-described inventions, the epoxide (C) has one or more hydroxyl groups.

In the invention described in a fifth aspect, which is in the above-described inventions, a water repellent layer containing at least one of amino-modified silicone and mercapto-modified silicone as a main component on the water absorbent layer.

In the invention described in a sixth aspect, which is in the above-described inventions, the water repellent layer contains at least one of the amino-modified silicone and the mercapto-modified silicone having a functional group equivalent of 5000 or more as a main component.

### ADVANTAGEOUS EFFECTS OF THE INVENTION

A main effect of the present invention is to provide the anti-fogging plastic spectacle lens having improved abrasion resistance and slipperiness.

### BRIEF DESCRIPTION OF THE DRAWINGS

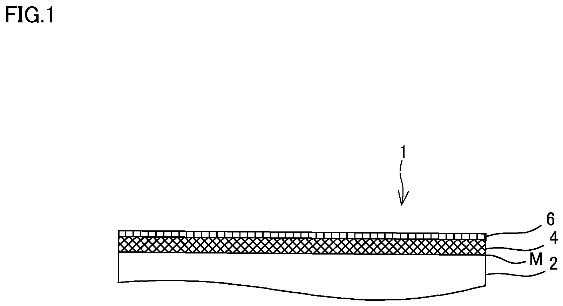

FIG. 1 is a schematic cross-sectional view of an anti-fogging plastic spectacle lens according to an embodiment of the present invention.

### DESCRIPTION OF EMBODIMENTS

Hereinafter, examples of an embodiment according to the present invention will be described based on the drawing as necessary.

It should be noted that the embodiment of the present invention is not limited to the examples.

In addition, in the notation of groups (atomic groups) in chemical formulas, the notation of a group that does not indicate whether the group is substituted or unsubstituted encompasses both that having no substituents and that having a substituent. For example, an alkyl group encompasses not only an alkyl group having no substituents (unsubstituted alkyl group), but also an alkyl group having a substituent (substituted alkyl group).

Further, (meth)acrylic encompasses both acrylic and methacrylic. The same applies to similar notation, such as (meth)acrylate.

In addition, a constituent unit derived from a monomer (a-1) is referred to as a constituent unit (a-1) in some cases. The same applies to similar notation, such as a constituent unit derived from a monomer (a-2).

The description of various physical properties in the embodiment of the present invention includes properties that have actually been confirmed as well as properties that can be reasonably inferred from a chemical structure.

As illustrated in FIG. 1, an anti-fogging plastic spectacle lens 1 according to the embodiment includes a base material 2, a water absorbent layer 4, and a water repellent layer 6.

The water-repellent layer 6 may be omitted.

The base material 2 is a plastic spectacle lens base material.

A material of the base material 2 is, for example, at least any of allyl-based resin, such as polydiethylene glycol bis allyl carbonate (CR-39), thiourethane-based resin, episulfide-based resin, polymethyl methacrylate, polymethyl methacrylate copolymer, polycarbonate, cellulose acetate, polyethylene terephthalate, polyvinyl chloride, acrylic resin, and polyurethane resin.

The water absorbent layer 4 is a water-absorbent resin layer.

The water absorbent layer 4 is formed on a film formation surface M (on an air side) arranged on one surface or both surfaces of the base material 2.

The water absorbent layer 4 is formed of a composition containing the following components.

That is, the composition contains a (meth)acrylic-based resin (A), a polyfunctional isocyanate compound (B), and epoxide (C).

The (meth)acrylic-based resin (A) has a constituent unit derived from the monomer (a-1) represented by chemical formula (1) below, a constituent unit derived from the monomer (a-2) represented by chemical formula (2) below, a constituent unit derived from a hydroxyalkyl (meth)acrylate (a-3), and a constituent unit derived from a monomer (a-4) represented by chemical formula (3) below.

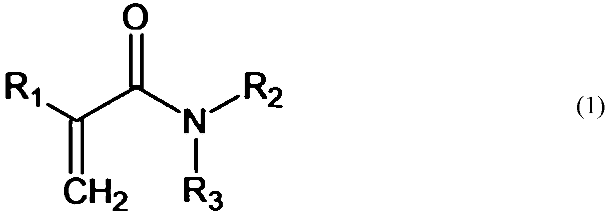

In chemical formula (1), R₁ is a hydrogen atom or methyl group, R₂ and R₃ are hydrogen atoms or linear or branched alkyl groups having 1 to 3 carbon atoms, and R₂ and R₃ may be identical to or different from one another.

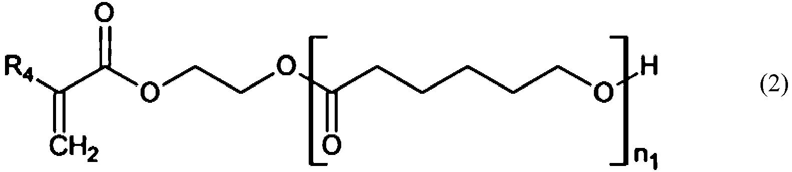

In chemical formula (2), R₄ is a hydrogen atom or methyl group, and n₁ is an integer of 1 or more and 5 or less.

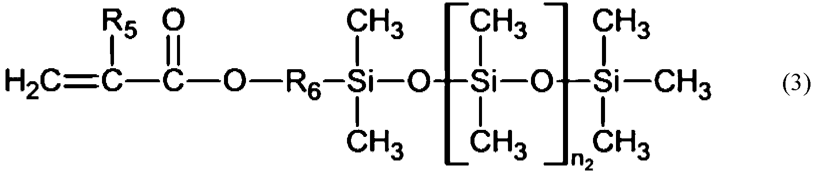

In chemical formula (3), R₅ is a hydrogen atom or methyl group, R₆ is a divalent organic group, and n₂ is an integer of 0 or not less than 1.

The (meth)acrylic-based resin (A) has the constituent unit derived from the monomer (a-1) at 20 mass% or more and 65 mass% or less, the constituent unit derived from the monomer (a-2) at 10 mass% or more and 40 mass% or less, and the constituent unit derived from the monomer (a-4) at 1 mass% or more and 10 mass% or less relative to 100 mass% of all the constituent units constituting the resin.

The polyfunctional isocyanate compound (B) is a compound having two or more isocyanate groups in one molecule. The isocyanate groups include an isocyanate group protected by a leaving group.

The number of functional groups of the polyfunctional isocyanate compound (B) is preferably two or more and six or less per molecule and further preferably two or more and four or less per molecule.

The epoxide (C) is an organic compound having a plurality of epoxy groups. The epoxide (C) preferably has two epoxy groups and further preferably has linear carbon atoms with respective epoxy groups disposed at both terminuses.

The epoxide (C) has preferably one or more hydroxyl groups to suppress liberation from other components.

The composition may further contain other components. As the other components, additives used in producing a composition (coating material) may be used.

For example, at least any of a curing catalyst, an ultraviolet absorber, a light stabilizer, a surfactant, a leveling agent, and an anti-foam agent may be used.

The water absorbent layer 4 is deposited by applying the composition to the film formation surface M to undergo polymerization.

In the JP 6340539 B, the invention of a cured film formed of a specific composition is patented (see Claim 7 of JP 6340539 B).

The water repellent layer 6 is arranged on the water absorbent layer 4 (on the air side and at an opposite side of the base material 2).

The water repellent layer 6 has a physical film thickness preferably equal to or less than a physical film thickness of the water absorbent layer 4. The physical film thickness of the water repellent layer 6 is preferably 0.5 nm or more and 20 nm or less.

A main component of the water repellent layer 6 is at least one of amino-modified silicone and mercapto-modified silicone. Here, the term that "main component" means a majority in mass%.

The water repellent layer 6 is preferably an uppermost layer of the water absorbent layer 4 (a layer arranged closest to the air side).

One or more other layers may be arranged on the water repellent layer 6. One or more other layers may be arranged between the water absorbent layer 4 and the water repellent layer 6. One or more other layers may be arranged between the base material 2 and the water absorbent layer 4. A layer between the base material 2 and the water absorbent layer 4 may be a primer layer (base layer). When the primer layer is formed on a surface of the base material 2, a surface of the primer layer may be treated as the surface of the base material 2. The primer layer may be a coupling layer that is arranged to improve adhesiveness between the water absorbent layer 4 and the base material 2. The primer layer is, for example, a urethane-based resin, an acrylic-based resin, a methacrylic-based resin, or an organic silicon-based resin. The primer layer is deposited by, for example, dipping the base material 2 in a primer liquid (dip method). The primer layer may be deposited by any of a spray method, a roll coating method, or a spin coating method.

The water repellent layer 6 is formed of a water repellent agent containing at least one of amino-modified silicone and mercapto-modified silicone as a main component.

An amount of the water repellent agent is set so as to enter a state in which, in the water repellent layer 6, water repellency is exerted while interference with the passage of moisture into the water absorbent layer 4 is suppressed.

The water repellent layer 6 is preferably formed by drying the base material 2 with the water absorbent layer 4 to which the water repellent agent is attached and further preferably formed by heating and drying the base material 2 with the water absorbent layer 4 to which the water repellent agent is attached.

In addition, when the water repellent layer 6 is formed, a cleaning treatment (pretreatment) of the base material 2 with the water absorbent layer 4 is preferably performed before the attachment of the water repellent agent. The cleaning treatment is, for example, at least any of cleaning with an ultrasonic cleaning machine, cleaning with a plasma cleaning machine, and degreasing with acid-alkali. The ultrasonic cleaning machine causes ultrasonic sound waves to act on the base material 2 with the water absorbent layer 4 (ultrasonic treatment). The plasma cleaning machine causes plasma to act on the base material 2 with the water absorbent layer 4 (plasma treatment). Such a cleaning treatment improves the adhesiveness of the water repellent layer 6. It should be noted that a similar pretreatment may be performed prior to the formation of at least any of the water absorbent layer 4 and other layers.

The (meth)acrylic-based resin (A) as one of the components of the composition related to the water absorbent layer 4 is further described in detail.

The constituent unit (a-1) has an amide group, so that the constituent unit (a-1) is highly hydrophilic, and therefore easily holds moisture. In view of this, the moisture attached to an upper side of the water absorbent layer 4 is absorbed into the water absorbent layer 4, suppressing generation of fogging in the anti-fogging plastic spectacle lens 1. That is, by containing the constituent unit (a-1), an anti-fogging property is given to the anti-fogging plastic spectacle lens 1.

The constituent unit (a-2) has what is called a polycaprolactone structure. The polycaprolactone structure has a flexible chemical skeleton that contributes to improving flexibility and elasticity of the water absorbent layer 4.

The constituent unit (a-4) has a polydimethylsiloxane chain. The polydimethylsiloxane chain contributes to improving slipperiness of the water absorbent layer 4.

Then, by containing the constituent unit (a-2) and the constituent unit (a-4), the water absorbent layer 4 exerts absorptive action by the flexibility and elasticity while exerting action of releasing by the slipperiness against an external force applied to the water absorbent layer 4 side, thereby suppressing the adhesion of scratches. That is, tear resistance is given to the water absorbent layer 4.

The constituent unit (a-2) has a hydroxyl group at a terminus. Accordingly, the constituent unit (a-2) undergoes cross-linking reaction with a polyfunctional isocyanate compound (B) and contributes to forming the water absorbent layer 4.

Here, if the cross-linking reaction between the (meth)acrylic-based resin (A) and the polyfunctional isocyanate compound (B) relates only to the constituent unit (a-2), the water absorbent layer 4 becomes too soft and exhibits sufficient flexibility but lacks elasticity.

Accordingly, by containing the constituent unit (a-3) that is harder than the constituent unit (a-2) as a component of the (meth)acrylic-based resin (A), the water absorbent layer 4 having harmonized flexibility and elasticity can be obtained. The constituent unit (a-3) contains a hydroxyl group.

Further, the constituent unit (a-2) enhances friction resistance of the water absorbent layer 4 while enhancing the flexibility and elasticity of the water absorbent layer 4 by the polycaprolactone structure. Accordingly, when the water absorbent layer 4 in which the constituent unit (a-2) predominates is stroked with a finger, it is easy to feel a snag on the finger and easy to feel resistance.

On the other hand, the constituent unit (a-4) gives slipperiness to the water absorbent layer 4 and reduces the friction resistance of the water absorbent layer 4 by the polydimethylsiloxane chain. However, since the constituent unit (a-4) has an abundance ratio smaller than an abundance ratio of the constituent unit (a-2), it is difficult to obtain sufficiently low friction resistance even when sufficient tear resistance is obtained. In order to reduce a sense of resistance in the water absorbent layer 4, in addition to the slipperiness, hardness equal to or more than a predetermined degree is required.

Therefore, by setting an equivalent ratio (NCO/OH), which is a ratio of isocyanate groups (numerator) to hydroxyl groups (denominator), to a specific range to be less than 1, in a state where a ratio of the constituent unit (a-2) and the constituent unit (a-3) that have hydroxyl groups is balanced, the hardness of the water absorbent layer 4 is improved to the degree that the friction resistance is sufficiently reduced. When the equivalent ratio (NCO/OH) is less than 1, the isocyanate groups are fewer than the hydroxyl groups. When the isocyanate groups are fewer than the hydroxyl groups, the isocyanate groups that are not involved in cross-linking decrease. In other words, a cross-linking density of the water absorbent layer 4 increases, so that the hardness of the water absorbent layer 4 improves, and the friction resistance decreases.

However, when the equivalent ratio (NCO/OH) is too small, cross-linking points that becomes a foundation of forming the water absorbent layer 4 become too few, and strength of the water absorbent layer 4 becomes insufficient. Accordingly, a lower limit exists for the equivalent ratio (NCO/OH).

The (meth)acrylic-based resin (A) is typically obtained by polymerization of the monomer (a-1), the monomer (a-2), a monomer (a-3), and the monomer (a-4).

It should be noted that all the constituent units of the (meth)acrylic-based resin (A) need not be constituent units derived from (meth)acrylic-based monomers. That is, the (meth)acrylic-based resin (A) may partially contain constituent units derived from monomers that are not (meth)acrylic-based monomers. However, it is preferred that 50 mass% or more of the constituent units of the (meth)acrylic-based resin (A) are constituent units derived from (meth)acrylic-based monomers so as to sufficiently obtain effects derived from a (meth)acrylic structure. It is more preferred that 80 mass% or more of the constituent units of the (meth)acrylic-based resin (A) are constituent units derived from (meth)acrylic-based monomers, and it is further preferred that 100 mass% of the constituent units of the (meth)acrylic-based resin (A) are constituent units derived from (meth)acrylic-based monomers.

The monomer (a-1) is not specifically limited as long as it has the structure of chemical formula (1) described above. The monomer (a-1) includes, for example, (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

For the monomer (a-1), at least one kind may be used, or two or more kinds may be used in combination. For example, the (meth)acrylic-based resin (A) may be obtained by performing polymerization reaction using two or more kinds of the monomers listed above.

From the aspect of improving the anti-fogging capacity of the water absorbent layer 4, the monomer (a-1) particularly preferably contains N,N-dimethyl (meth)acrylamide and/or N,N-diethyl (meth)acrylamide.

The constituent unit derived from the monomer (a-1) in the (meth)acrylic-based resin (A) is contained at 20 mass% or more and 65 mass% or less, more preferably at 35 mass% or more and 60 mass% or less, and further preferably at 40 mass% or more and 55 mass% or less relative to all the constituent units of the resin.

If the constituent unit derived from the monomer (a-1) is less than 20 mass%, it is difficult to form the water absorbent layer 4 that exhibits anti-fogging capacity suitable for practical use. On the other hand, if the constituent unit derived from the monomer (a-1) exceeds 65 mass%, a proportion of constituent units derived from other monomers relatively decreases, resulting in a comparatively poor balance in the overall composition.

The monomer (a-2) is not specifically limited as long as it has the structure of chemical formula (2) described above. The monomer (a-2) includes, for example, "PLACCEL F" series manufactured by Daicel Corporation.

The constituent unit derived from the monomer (a-2) in the (meth)acrylic-based resin (A) is contained at 10 mass% or more and 40 mass% or less, more preferably at 20 mass% or more and 38 mass% or less, and further preferably at 25 mass% or more and 35 mass% or less relative to all the constituent units of the resin.

If the constituent unit derived from the monomer (a-2) is less than 10 mass%, the flexibility of the water absorbent layer 4 becomes insufficient. On the other hand, if the constituent unit derived from the monomer (a-2) exceeds 40 mass%, the elasticity of the water absorbent layer 4 becomes insufficient.

The (meth)acrylic-based resin (A) may contain a plurality of kinds of repeating units derived from the monomer (a-2). For example, the (meth)acrylic-based resin (A) may be obtained by the polymerization in a state where two or more compounds belonging to the above-described "PLACCEL F" series are contained.

The monomer (a-3) is a hydroxyalkyl (meth)acrylate. Examples of the monomer (a-3) include, for example, hydroxyethyl (meth)acrylate, hydroxypropyl (meth)acrylate, and hydroxybutyl (meth)acrylate. Among them, hydroxyethyl (meth)acrylate is preferred.

The constituent unit derived from the monomer (a-3) in the (meth)acrylic-based resin (A) is contained preferably at 1 mass% or more and 30 mass% or less, more preferably at 2 mass% or more and 20 mass% or less, and further preferably at 3 mass% or more and 15 mass% or less relative to all the constituent units of the (meth)acrylic-based resin (A).

The monomer (a-3) has a hydroxyl group similarly to the monomer (a-2) and undergoes cross-linking reaction with the polyfunctional isocyanate compound (B) to form the water absorbent layer 4. Instead of only the monomer (a-2) causing the cross-linking reaction to form the water absorbent layer 4, the cross-linking reaction with the polyfunctional isocyanate compound (B) is caused together with the monomer (a-3) to form the water absorbent layer 4. Therefore, the water absorbent layer 4 possesses various physical properties.

Since the (meth)acrylic-based resin (A) contains the constituent units derived from the monomer (a-2) and the monomer (a-3), the (meth)acrylic-based resin (A) is a resin having hydroxyl groups, that is, a hydroxyl group value as a whole. In view of this, the (meth)acrylic-based resin (A) can react with the polyfunctional isocyanate compound (B) to form a cross-linked structure.

The hydroxyl group value of the (meth)acrylic-based resin (A) is preferably 40 mg KOH/g or more and 150 mg KOH/g or less, more preferably 70 mg KOH/g or more and 140 mg KOH/g or less, and further preferably 90 mg KOH/g or more and 130 mg KOH/g or less. Here, the hydroxyl group value is the number of milligrams (mg) of potassium hydroxide required to neutralize acetic acid bound to hydroxyl groups on acetylation of one gram of a sample.

The hydroxyl group value being in such a numerical range causes the reaction with the polyfunctional isocyanate compound (B) and controls the cross-linked structure appropriately. Therefore, in a state where the flexibility and elasticity of the water absorbent layer 4 are maintained, the water absorbent layer 4 hardens. Accordingly, more advanced compatibility between abrasion resistance and reduction of friction resistance of the water absorbent layer 4 is ensured.

The monomer (a-4) is not specifically limited as long as it has the structure of chemical formula (3) described above. The monomer (a-4) includes, for example, Silaplane "FM-0711", "FM-0721", and "FM-0725" manufactured by JNC Corporation, "X-22-174DX" and "X-22-2426" manufactured by Shin-Etsu Chemical Co., Ltd., and "AK-5" and "AK-32" manufactured by Toagosei Co., Ltd.

The (meth)acrylic-based resin (A) may contain a plurality of kinds of repeating units derived from the monomer (a-4). For example, the (meth)acrylic-based resin (A) may be obtained by performing polymerization reaction using two or more kinds of the monomers listed above.

The constituent unit derived from the monomer (a-4) in the (meth)acrylic-based resin (A) is contained at 1 mass% or more and 10 mass% or less, more preferably at 2 mass% or more and 8 mass% or less, and further preferably at 3 mass% or more and 7 mass% or less relative to all the constituent units of the resin.

If the constituent unit derived from the monomer (a-4) is less than 1 mass%, it is difficult to obtain the water absorbent layer 4 that has sufficient abrasion resistance. On the other hand, if the constituent unit derived from the monomer (a-4) exceeds 10 mass%, it is difficult to synthesize the homogeneous (meth)acrylic-based resin (A). This is because the monomer (a-1) has an amide group and is extremely hydrophilic to easily mixed with water, whereas the monomer (a-4) is relatively strong in hydrophobicity, making it difficult to mix with one another.

The (meth)acrylic-based resin (A) may contain or need not contain any constituent unit (a-5) other than the constituent unit (a-1), the constituent unit (a-2), the constituent unit (a-3), or the constituent unit (a-4). Examples of the constituent unit (a-5) include, for example, a constituent unit derived from a monomer represented below. The (meth)acrylic-based resin (A) contains such a constituent unit (a-5), thereby adjusting a glass-transition temperature thereof and physical properties (hardness, softness, and the like) of the water absorbent layer 4.

That is, the constituent unit (a-5) is, for example, a constituent unit derived from a monomer represented by general formula CH₂ = CR-COO-R'. Here, R is a hydrogen atom or methyl group, and R' is an alkyl group, monocyclic or polycyclic cycloalkyl group, aryl group, or aralkyl group. Such a monomer includes, for example, methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate. Among them, the monomer in which R' is an alkyl group having not less than 1 and not more than 8 carbon atoms is preferred, the monomer in which R' is an alkyl group having not less than 1 and not more than 6 carbon atoms is more preferred, and the monomer in which R' is an alkyl group having not less than 1 and not more than 4 carbon atoms is further preferred.

The (meth)acrylic-based resin (A) may contain a plurality of kinds of repeating units corresponding to the monomer (a-5). For example, the (meth)acrylic-based resin (A) may be obtained by performing polymerization reaction using two or more kinds of the monomers listed above.

When the (meth)acrylic-based resin (A) contains the constituent unit (a-5), an amount of the constituent unit (a-5) contained is preferably 1 mass% or more and 40 mass% or less, more preferably 3 mass% or more and 30 mass% or less, and further preferably 5 mass% or more and 20 mass% or less relative to all the constituent units of the (meth)acrylic-based resin (A).

A weight average molecular weight (Mw) of the (meth)acrylic-based resin (A) is not specifically limited but is preferably 10000 or more and 100000 or less, more preferably 20000 or more and 70000 or less, and further preferably 30000 or more and 60000 or less. When the weight average molecular weight is 10000 or more, the anti-fogging capacity is easy to be given, and when the weight average molecular weight is 100000 or less, coating suitability is easy to be given.

The weight average molecular weight can be determined by gel permeation chromatography (GPC) using polystyrene as a standard substance.

The glass-transition temperature of the (meth)acrylic-based resin (A) is not specifically limited but is preferably 20°C or higher and 120°C or lower, more preferably 30°C or higher and 110°C or lower, and further preferably 35°C or higher and 100°C or lower. The glass-transition temperature of the (meth)acrylic-based resin (A) can be determined by various methods. The glass-transition temperature can be determined, for example, based on the Fox equation. For monomers whose glass-transition temperature is unknown, such as special monomers and polyfunctional monomers, the glass-transition temperature is determined only by using monomers whose glass-transition temperature is known.

The (meth)acrylic-based resin (A) is typically obtained by polymerization reaction. It is only necessary for the polymerization reaction to be various methods, such as radical polymerization, cation polymerization, and anion polymerization, and among them, radical polymerization is preferred. In addition, polymerization may be any of solution polymerization, suspension polymerization, emulsion polymerization. Among them, from the aspect of precise control of polymerization, solution polymerization is preferred.

A known polymerization initiator may be used as the polymerization initiator for the radical polymerization. Examples of the polymerization initiator include, for example, azo-based initiators, peroxide-based initiators and redox-based initiators in which an oxidizing agent and a reducing agent are combined. Azo-based initiators are such as azobisisobutyronitrile, 2,2-azobis(2-methylbutyronitrile), 2,2-azobis(2-methylpropionitrile), and 2,2-azobis(2,4-dimethylvaleronitrile). Peroxide-based initiators are such as benzoyl peroxide, t-butylperoxy octanoate, diisobutyl peroxide, di(2-ethylhexyl) peroxypivalate, decanoyl peroxide, t-butylperoxy-2-ethyl hexanoate, and t-butyl peroxybenzoate. Redox-based initiators are such as a combination of hydrogen peroxide and iron(II) salt, and persulfate and sodium hydrogen sulfite. One kind thereof may be used alone, or two or more kinds may be used in combination.

An amount of the polymerization initiator blended is not specifically limited but is preferably not less than 0.001 parts by mass and not more than 10 parts by mass when an entire mixture of the monomers to be polymerized is defined as 100 parts by mass.

In the polymerization reaction, known chain transfer agents, polymerization inhibitors, and molecular weight regulators may be used as necessary. Further, the polymerization reaction may be performed in one step or may be performed in two or more steps. A temperature of the polymerization reaction is not specifically limited but is typically 50°C or higher and 200°C or lower, and preferably 80°C or higher and 150°C or lower.

The polyfunctional isocyanate compound (B) as one of the components of the composition related to the water absorbent layer 4 is further described in detail.

The polyfunctional isocyanate compound (B) undergoes cross-linking reaction with the hydroxyl groups that the constituent unit (a-2) and the constituent unit (a-3) contained in the (meth)acrylic-based resin (A) have.

The polyfunctional isocyanate compound (B) is a compound having two or more isocyanate groups (including an isocyanate group protected by a leaving group) in one molecule. The number functional groups of the polyfunctional isocyanate compound (B) is preferably two or more and six or less per molecule and further preferably two or more and four or less per molecule.

The polyfunctional isocyanate compound (B) is, for example, aliphatic diisocyanate, cyclic aliphatic diisocyanate and trifunctional or higher isocyanate, such as lysine triisocyanate. Aliphatic diisocyanate is such as lysine isocyanate, hexamethylene diisocyanate, and trimethylhexane diisocyanate. Cyclic aliphatic diisocyanate is such as hydrogenated xylylene diisocyanate, isophorone diisocyanate, methylcyclohexane-2,4-(or 2,6)-diisocyanate, 4,4'-methylenebis (cyclohexyl isocyanate), and 1,3-(isocyanatomethyl) cyclohexane.

As the polyfunctional isocyanate compound (B), in addition to those listed above, a biuret type, an isocyanurate type, an adduct type are known as multimers thereof. While any of them can be used as a composition, among them, a biuret type polyfunctional isocyanate compound is particularly preferably used. This is because the structure that the biuret type has is a structure having a more appropriate hardness, which is softer than a isocyanurate type and harder than the adduct type.

The polyfunctional isocyanate compound (B) may be what is called a blocked isocyanate. That is, some or all of the isocyanate groups of the polyfunctional isocyanate compound (B) may be in a form of a blocked isocyanate group blocked by a protecting group. The blocked isocyanate group is formed, for example, by blocking the isocyanate groups by an active hydrogen compound of alcohol system, phenol system, lactam system, oxime system, active methylene system, and the like.

In particular, when the composition is a one-liquid type, the polyfunctional isocyanate compound (B) having a blocked isocyanate group is preferred from the aspect of preservative quality (temporal stability).

As the polyfunctional isocyanate compound (B), for example, "DURANATE" series manufactured by Asahi Kasei Corp., "Sumidur" series manufactured by Sumika Bayer Urethane Co., Ltd., and "CORONATE" series manufactured by Nippon Polyurethane Industry Co., Ltd. are used.

While an amount of the polyfunctional isocyanate compound (B) contained in the composition does not particularly have a restriction, the polyfunctional isocyanate compound (B) is preferably blended according to the equivalent ratio (NCO)/(OH). In particular, the contained amount is preferably not less than 5 parts by mass and not more than 100 parts by mass relative to 100 parts by mass of the (meth)acrylic-based resin (A), more preferably not less than 7 parts by mass and not more than 75 parts by mass, and further preferably not less than 10 parts by mass and not more than 70 parts by mass. The contained amount of the polyfunctional isocyanate compound (B) within the numerical range results in sufficient cross-linking in the water absorbent layer 4.

As described above, the epoxide (C) is an organic compound having a plurality of epoxy groups.

The epoxide (C) is, for example, at least any of ethylene glycol diglycidyl ether, diethylene glycol diglycidyl ether, polyethylene glycol #200 diglycidyl ether, polyethylene glycol #400 diglycidyl ether, propylene glycol diglycidyl ether, tripropylene glycol diglycidyl ether, polypropylene glycol #400 diglycidyl ether, neopentyl glycol diglycidyl ether, 1,6-hexanediol diglycidyl ether, glycerin diglycidyl ether, trimethylolpropane triglycidyl ether, hydrogenated bisphenol A diglycidyl ether, and bisphenol A PO2 mol adduct diglycidyl ether. Among them, the epoxide (C) having a hydroxyl group is, for example, glycerin diglycidyl ether.

As the epoxide (C), for example, "EPOLIGHT" series manufactured by Kyoeisha Chemical Co., Ltd. are used.

Among them, the epoxide (C) having a hydroxyl group is "EPOLIGHT 80MF".

While an amount of the epoxide (C) contained in the composition does not particularly have a restriction, the contained amount is preferably determined so as to sufficiently obtain the adhesiveness of the water absorbent layer 4 in a state where a water-absorbing property in the water absorbent layer 4 are not excessively impaired. In particular, the contained amount is preferably not less than 1 part by mass and not more than 10 parts by mass relative to 100 parts by mass of a combination of the (meth)acrylic-based resin (A) and the polyfunctional isocyanate compound (B), more preferably not less than 3 parts by mass and not more than 8 parts by mass, and further preferably not less than 5 parts by mass and not more than 7 parts by mass.

The contained amount of the epoxide (C) within the numerical range ensures that the adhesiveness of the water absorbent layer 4 becomes sufficient in a state where other performances are not excessively impaired.

The composition is typically used in a state where each component is dissolved or dispersed in a solvent.

The solvent is an organic solvent as one aspect. Examples of the organic solvent include, for example, aromatic hydrocarbon-based solvents, such as toluene and xylene, alcohol-based solvents, such as methanol, ethanol, isopropyl alcohol, n-butanol, and isobutanol, ketone-based solvents, such as acetone, methyl ethyl ketone, methyl isobutyl ketone, and cyclohexanone, ester-based solvents, such as ethyl acetate, propyl acetate, butyl acetate, and isobutyl acetate, and glycol ether-based solvents, such as propylene glycol monomethyl acetate, propylene glycol monomethyl ether, and propylene glycol monomethyl ether acetate.

While an amount of the solvent used is not specifically limited, the amount is set such that a concentration of solid content (non-volatile components) is preferably 5 mass% or more and 60 mass% or less, and more preferably 10 mass% or more and 50 mass% or less.

By appropriately adjusting a quantitative ratio of the respective components of the (meth)acrylic-based resin (A), the polyfunctional isocyanate compound (B), and the epoxide (C), the composition can further improve the flexibility and the elasticity of a cured film and form the cured film excellent in various physical properties.

In particular, when the ratio of the quantity of isocyanate groups to the quantity of hydroxyl groups in the composition is appropriately adjusted, the physical properties of the final resulting water absorbent layer 4 becomes more favorable.

That is, a molar quantity (equivalent ratio (NCO)/(OH)) of the isocyanate groups (including a blocked isocyanate group) contained in the polyfunctional isocyanate compound (B) to the hydroxyl groups that the (meth)acrylic-based resin (A) has is preferably in a range of 0.15 or more and 0.55 or less.

The reason is that first of all, when the equivalent ratio (NCO)/(OH) is less than 0.15, even when all the isocyanate groups (NCO) contained in the composition cause cross-linking reaction, a cross-linking density of the isocyanate groups is insufficient, making it difficult to reach a required level as the water absorbent layer 4.

On the other hand, even when the equivalent ratio (NCO)/(OH) exceeds 0.55, the number the isocyanate groups (NCO) relative to the hydroxyl groups (OH) becomes relatively too high, making it difficult to obtain the cross-linking density required as the entire water absorbent layer 4. The reason is that when the count of the isocyanate groups (NCO) relative to the hydroxyl groups (OH) is relatively high, for example, in focusing on a single molecule of polyfunctional isocyanate compound, a situation in which the isocyanate group involved in reaction and the isocyanate group not involved in reaction arise in the molecule is likely to happen, and as a result, the cross-linking density comparatively decreases, making it difficult for functions, such as the anti-fogging property and solvent resistance as the water absorbent layer 4 to become sufficient.

It should be noted that the equivalent ratio (NCO)/(OH) is more preferably 0.25 or more and 0.50 or less, and further preferably 0.35 or more and 0.45 or less.

In the composition, the hydroxyl group value of the (meth)acrylic-based resin (A) is in a range of preferably 80 mg KOH/g or more and 190 mg KOH/g or less, more preferably 100 mg KOH/g or more and 150 mg KOH/g or less, and further preferably 110 mg KOH/g or more and 140 mg KOH/g or less. The hydroxyl group value being in such a range further improves the flexibility and elasticity of the water absorbent layer 4 and forms the water absorbent layer 4 further excellent in various physical properties.

The composition may be a one-liquid type, that is, in a state where all components except the solvent are substantially uniformly mixed (dissolved or dispersed) in the solvent.

When the polyfunctional isocyanate compound (B) is a blocked isocyanate, the one-liquid type is preferred.

The composition may be a two-liquid type. When the composition is a two-liquid type, the preservative quality of the composition can be enhanced more. For example, the composition may be composed of (1) a first liquid that contains the (meth)acrylic-based resin (A) and does not contain the polyfunctional isocyanate compound (B), and (2) a second liquid that contains the polyfunctional isocyanate compound (B) and does not contain the (meth)acrylic-based resin (A). The composition may be in a form in which the first liquid and the second liquid are stored in separate containers, and the first liquid and the second liquid are mixed just before use (coating).

Components other than the (meth)acrylic-based resin (A) or the polyfunctional isocyanate compound (B) may be contained in the first liquid, may be contained in the second liquid, or may be prepared in another container. In particular, when the polyfunctional isocyanate compound (B) is not a blocked isocyanate (when the isocyanate groups are present in a form of -NCO in the system), the composition is preferably the two-liquid type.

The physical film thickness of the water absorbent layer 4 is preferably 1µm or more and 50 µm or less and more preferably 5 µm or more and 30 µm or less.

The physical film thickness being in such a range ensures more advanced compatibility between a good appearance (suppression of lowered optical performance compared to a case of the base material 2 alone) and various properties of the water absorbent layer 4.

Subsequently, the water repellent layer 6 is further described in detail.

The main component of the water repellent layer 6 is, for example, reactive silicone.

While the reactive silicone is a product in which a reactive functional group is introduced into polydimethylsiloxane (silicone), that undergoes polycondensation with an organosilicon compound, the reactive silicone is preferably at least one of amino-modified silicone or mercapto-modified silicone.

When an amino group and a mercapto group are contained in the reactive silicone, a reactivity with the water absorbent layer 4 having an ester bond becomes proper. On the other hand, silicone having a silanol group and fluoroalkylsilane have comparatively poor reactivity with the water absorbent layer 4 and are inferior in terms of water-repelling performance.

Functional group equivalents of the amino-modified silicone and the mercapto-modified silicone are preferably 5000 or more and 100000 or less and more preferably 10000 or more and 60000 or less.

The amino-modified silicone is, for example, at least one of "KF-869" and "KF-8021" manufactured by Shin-Etsu Chemical Co., Ltd. These are side-chain type amino-modified silicones, which are diamine-modified types. Of them, "KF-8021" (a viscosity (at 25°C) of 15000 mm² per second and a functional group equivalent of 55000 g/mol) is preferred from the aspect of contribution to the improvement of the slipperiness of the water repellent layer 6 because the viscosity and the functional group equivalent are larger than those of "KF-869" (a viscosity of 1500 mm² per second and a functional group equivalent of 3800 g/mol).

The water repellent layer 6 can be deposited by, for example, applying a solution prepared by mixing the above-described components with non-reactive solvents on the surface of the water absorbent layer 4 using a wet method, such as a dipping method, a spray method, a roll coating method, or a spin coating method. The above-described non-reactive solvents are, for example, aliphatic hydrocarbon-based solvent, such as hexane, heptane, and cyclohexane, ketone-based solvents, such as acetone, methyl ethyl ketone, and methyl isobutyl ketone, and the like. One of the solvents may be used alone, or the solvents may be used in combination.

The physical film thickness of the water repellent layer 6 is preferably 0.5 nm or more and 20 nm or less, and more preferably 10 nm or less to suppress effects on the water-absorbing property of the water absorbent layer 4.

A contact angle of the water repellent layer 6 surface to water is preferably 100 degrees or more. The largeness or smallness of the contact angle depends on a remaining degree of water-soluble components, such as a surfactant, contained in the water absorbent layer 4 and an adhesion degree of the modified silicone to the water absorbent layer 4 surface. In order to make the contact angle larger, when the water repellent layer 6 is deposited, the base material 2 with the water absorbent layer 4 may be treated with, for example, at least one of water and alcohol to remove the water-soluble components or may be treated by surface activation treatment to enhance the reactivity. Such treatment processing is preferably physical treatment processing, for example, at least one of plasma treatment and ultraviolet treatment, and more preferably plasma treatment processing of them.

Examples belonging to the present invention are indicated below. However, the Examples do not limit the scope of the present invention.

The above-described composition was applied to the base material 2 made of thiourethane ("MR-8" manufactured by Mitsui Chemicals, Inc.) having a refractive index of 1.60, which was the base material 2 as a spectacle lens base material having a diopter power of S-2.00 by the dipping method. Further, the applied composition was heated at 130°C for two hours and cured, thereby depositing the water absorbent layer 4 to form Example 1. A solvent was propylene glycol monomethyl ether (PGM).

In the (meth)acrylic-based resin (A) of the composition here, the constituent unit (a-1) is dimethylacrylamide (DMAA) and 50 mass%. The constituent unit (a-2) is polycaprolactone-modified hydroxyethyl acrylate ("PLACCEL FA2D" manufactured by Daicel Corporation) and 35 mass%. The constituent unit (a-3) is 2-hydroxylehtyl methacrylate (HEMA) and 10 mass%. The constituent unit (a-4) is one-terminal methacrylate-modified polydimethylsiloxane ("Silaplane FM-0721" manufactured by JNC Corporation) and 5 mass%.

The polyfunctional isocyanate compound (B) of the composition here is a biuret type of hexamethylene diisocyanate ("24A-100" manufactured by Asahi Kasei Corp.) and 18 parts by mass relative to 100 parts by mass of the (meth)acrylic-based resin (A).

Further, the epoxide (C) of the composition here is glycerin diglycidyl ether ("EPOLIGHT 80M" manufactured by Kyoeisha Chemical Co., Ltd.) and 6 parts by mass (about 6 mass% of the composition solid content) relative to 100 parts by mass of the (meth)acrylic-based resin (A) and polyfunctional isocyanate compound (B).

The volume of residual hydroxyl groups (residual OH Vol.) in the composition of Example 1 is 20% or more and less than 30% (20% to 30%), and the volume of hydroxyl groups in resin (resin OH Vol.) is at a medium degree (medium). Since the applicant is not a material manufacturer, only a wide range of information on the residual OH Vol. can be substantially obtained (a great deal of time and cost is required for analysis). For the resin OH Vol., since a great deal of time and cost is required to analyze elements of the resin, the relative largeness or smallness is substantially grasped.

In addition, the composition was cured on the base material 2 made of thiourethane ("MR-8" manufactured by Mitsui Chemicals, Inc.) having a refractive index of 1.60, which was the base material 2 as a flat plate having a thickness of 2 mm to deposit the water absorbent layer 4 similarly to Example 1, thereby forming Example 2.

Further, amino-modified silicone ("KF-869" manufactured by Shin-Etsu Chemical Co., Ltd.) was applied to Example 2 by the dipping method to deposit the water repellent layer 6 on the water absorbent layer 4, thereby forming Example 3. The physical film thickness of the water repellent layer 6 of Example 3 is about 10 nm.

Furthermore, Example 4 was formed similarly to Example 3, except that the amino-modified silicone was "KF-8021" manufactured by Shin-Etsu Chemical Co., Ltd.

In addition, Example 5 was formed similarly to Example 4, except that the base material 2 with the water absorbent layer 4 was subjected to plasma treatment before the amino-modified silicone was applied.

Comparative Example 1 was formed similarly to Example 1, except that the epoxide (C) was not used in the composition, the residual OH Vol. (5% to 8%) and the resin OH Vol. (small) of the (meth)acrylic-based resin (A) were reduced from those of Example 1, a polyol compound ("CD205PL" manufactured by Daicel Corporation) as a cross-linking auxiliary agent was further added in a quantity of 30 mass% relative to the entire composition solid content, and the curing period was reduced to 1.5 hours. The polyol compound reacts with the (meth)acrylic-based resin (A) as well as the polyfunctional isocyanate compound (B) to form the water absorbent layer 4. The polyol compound enters between the (meth)acrylic-based resin (A) and the polyfunctional isocyanate compound (B) to undergo reaction, plays a role as a bridge, maintains a sufficient cross-linking density as the water absorbent layer 4, and plays a role in widening a gap for moisture to be absorbed. The polyol compound of Comparative Example 1 does not have an alicyclic skeleton.

Comparative Example 2 was formed similarly to Comparative Example 1, except that the residual OH Vol. (9% to 11%) and the resin OH Vol. (medium) of the (meth)acrylic-based resin (A) were increased compared to Comparative Example 1.

Comparative Example 3 was formed similarly to Comparative Example 2, except that the residual OH Vol. (12% to 15%) and the resin OH Vol. (large) of the (meth)acrylic-based resin (A) were increased compared to Comparative Example 2.

Comparative Example 4 was formed similarly to Comparative Example 2, except that the polyol compound was the one having an alicyclic skeleton (polycaprolactone diol; "PLACCEL 205U" manufactured by Daicel Corporation), the mass% of the polyfunctional isocyanate compound (B) was reduced by 40 points, and the residual OH Vol. was 20% to 30%.

Comparative Example 5 was formed similarly to Comparative Example 1, except that the polyol compound having an alicyclic skeleton was added similarly to Comparative Example 4, the epoxide (C) was further added equivalently to Example 1, and the resin OH Vol. was small.

Comparative Example 6 was formed similarly to Comparative Example 5, except that the resin OH Vol. of the (meth)acrylic-based resin (A) was equivalent to that of Comparative Example 2.

Comparative Example 7 was formed similarly to Comparative Example 6, except that the curing period was increased to two hours.

Comparative Example 8 was formed similarly to Comparative Example 4, except that the curing period was increased to two hours, and the residual OH Vol. was 7% to 10%.

The (meth)acrylic-based resins (A) in Example 1 and Comparative Examples 2, 4, 6, and 7 are the same. In Comparative Example 4, since the mass% of the polyfunctional isocyanate compound (B) is reduced by 40 points, the residual OH Vol. increases. In addition, the residual OH Vol. in Example 1 and Comparative Examples 5 to 7 include the residual OH Vol. of the epoxide (C).

Comparative Example 9 was formed similarly to Comparative Example 1, except that the base material 2 was a flat plate similarly to Example 2.

Comparative Example 10 was formed by depositing the water repellent layer 6 (KF-869) similar to that of Example 2 on the base material 2 with the water absorbent layer 4 of Comparative Example 9.

Comparative Example 11 was formed similarly to Comparative Example 10, except that the water repellent layer 6 was the same (KF-8021) as that of Example 3.

Test results of weather resistance for Example 1 and Comparative Examples 1 to 8 (all without the water repellent layer 6) are shown in the right part of Table 1 below.

Test results of tactile sensation (slipping and gripping), scratch resistance, and anti-fogging property for Example 1 and Comparative Examples 1 to 8 (all without the water repellent layer 6) are shown in the right part of Table 2 below.

Test results of slipperiness for Example 2 and Comparative Example 9 (both without the water repellent layer 6) and Examples 3 to 5 and Comparative Examples 10 and 11 (all with the water repellent layer 6) are shown in the right part of Table 3 below.

In each left part of Table 1 and Table 2, the resin OH Vol., the presence or absence of epoxide, the presence or absence of polyol, the presence or absence of alicyclic ring when polyol is present, and the residual OH Vol. in Example 1 and Comparative Examples 1 to 8 are shown. In addition, the types of the water repellent agent ("-" when the water repellent layer 6 is absent) are shown in the left part of Table 3.

**[Table 1]**

| | Composition | | | | | Weather-resistant adhesiveness (number of remaining squares in 100 squares) | | | | | |
|---|---|---|---|---|---|---|---|---|---|---|---|
| | Resin OH Vol. | Epoxide | Polyol | Alicyclic ring | Residual OH Vol. [%] | Initial | 60 hr. | 120 hr. | 180 hr. | 240 hr. | Evaluation |
| Comparative Example 1 | Small | --- | Present | --- | 5-8 | 100 | 90 | --- | --- | --- | × |
| Comparative Example 2 | Medium | --- | Present | --- | 9-11 | 90 | 80 | --- | --- | --- | × |
| Comparative Example 3 | Large | --- | Present | --- | 12-15 | 100 | 100 | 80 | --- | --- | × |
| Comparative Example 4 | Medium | --- | Present | Present | 20-30 | 100 | 100 | 50 | --- | --- | × |
| Comparative Example 5 | Small | Present | Present | Present | 20-30 | 100 | 100 | 0 | --- | --- | × |
| Comparative Example 6 | Medium | Present | Present | Present | 20-30 | 100 | 100 | 100 | 100 | 99 | ○ |
| Comparative Example 7 | Medium | Present | Present | Present | 20-30 | 100 | 100 | 100 | 100 | 100 | ○ |
| Comparative Example 8 | Medium | --- | Present | Present | 7-10 | 100 | 100 | 99 | 95 | 90 | Δ |
| Example 1 | Medium | Present | --- | | 20-30 | 100 | 100 | 100 | 100 | 98 | ○ |

**[Table 2]**

| | Composition | | | | | Tactile sensation | Scratch resistance | Anti-fogging property (exhaled breath) |
|---|---|---|---|---|---|---|---|---|
| | Resin OH Vol. | Epoxide | Polyol | Alicyclic ring | Residual OH Vol. [%] | | | |
| Comparative Example 1 | Small | --- | Present | --- | 5-8 | Δ | 5.0 | ○ |
| Comparative Example 2 | Medium | --- | Present | --- | 9-11 | ○ | 5.0 | Δ |
| Comparative Example 3 | Large | --- | Present | --- | 12-15 | ○ | 3.0 | Δ |
| Comparative Example 4 | Medium | --- | Present | Present | 20-30 | Δ | 5.0 | ○ |
| Comparative Example 5 | Small | Present | Present | Present | 20-30 | ○ | 5.7 | ○ |
| Comparative Example 6 | Medium | Present | Present | Present | 20-30 | ○ | 5.7 | ○ |
| Comparative Example 7 | Medium | Present | Present | Present | 20-30 | ○ | 5.3 | ○ |
| Comparative Example 8 | Medium | --- | Present | Present | 7-10 | ○-⊚ | 5.7 | ○ |
| Example 1 | Medium | Present | --- | | 20-30 | ⊚ | 5.7 | ○ |

**[Table 3]**

| | Water repellent agent | µₛ | µₖ |
|---|---|---|---|
| Comparative Example 9 | - | **0.426** | **0.099** |
| Comparative Example 10 | KF-869 | 0.392 | 0.067 |
| Comparative Example 11 | KF-8021 | 0.212 | 0.026 |
| Example 2 | - | **0.054** | **0.027** |
| Example 3 | KF-869 | 0.020 | 0.012 |
| Example 4 | KF-8021 | 0.019 | 0.009 |
| Example 5 | Plasma treatment + KF-8021 | 0.010 | 0.004 |

For Example 1 and Comparative Examples 1 to 8, a weather-resistant adhesion test was conducted under accelerated conditions described below to evaluate the weather resistance (see Table 1 above).

First, on a surface on the water absorbent layer 4 side, 100 squares were formed by a cutter in a state where one square was shaped in a square shape with a size of 10 mm on one side.

Next, adhesion and vigorous stripping of cellophane tape to an area where the squares were formed were repeated five times to confirm the number of squares where peeling was not caused (initial confirmation). The peeling of half a square was counted as 0.5 squares.

Subsequently, a test object (Example 1 or any of Comparative Examples 1 to 8) was loaded into a sunshine weather meter (S80B manufactured by Suga Test Instruments Co., Ltd.) for 60 hours (hr.), and then, similarly to before the loading, the number of squares where peeling was not caused by the applied cellophane tape to an area where squares were newly formed was counted (confirmation of 60 hr.).

Afterwards, similarly, the test object was further loaded into the sunshine weather meter for 60 hours to confirm the number of squares that were not peeled off (confirmation of a total of 120 hr.), and such loading and confirmation were repeated every 60 hours from the first loading to confirmation after the total of 240 hours of loading (confirmation of 180hr. and confirmation of 240hr.).

Based on the result of the confirmation of 240 hr., weather-resistant adhesiveness was evaluated. That is, when the number of squares without peeling was 95 squares or more and 100 squares or less, the evaluation was given as "○". When the number of squares without peeling was 80 squares or more and 94 squares or less, the evaluation was given as "Δ". Further, when the number of squares without peeling was 79 squares or less, and when the test was terminated in less than 240 hr., the evaluation was given as "×".

In Comparative Examples 1 and 2, a great deal of peeling was observed at the time of the confirmation of 60 hr., and the test was terminated midway. Both the weather-resistant adhesiveness evaluations for Comparative Examples 1 and 2 are "×".

In Comparative Examples 3 to 5, a great deal of peeling was observed at the time of the confirmation of 120 hr., and the test was terminated midway. All the weather-resistant adhesiveness evaluations for Comparative Examples 3 to 5 are "×".

In Comparative Examples 6 and 7, the numbers of remaining squares at the time of the confirmation of 240 hr. are 99 and 100 in sequence, and both the weather-resistant adhesiveness evaluations for Comparative Examples 6 and 7 are "○".

In Comparative Example 8, the number of remaining squares at the time of the confirmation of 240 hr. is 90, and the weather-resistant adhesiveness evaluation is "Δ".

In Example 1, the number of remaining squares at the time of the confirmation of 240 hr. is 98, and the weather-resistant adhesiveness evaluation is "○".

For Example 1 and Comparative Examples 1 to 8, a tactile sensation test as described below was conducted to evaluate the tactile sensation (see Table 2 above).

That is, an examiner evaluated the largeness or smallness of resistance (grip feeling), felt when the examiner started wiping the test object with a commercially available eyeglass wiping cloth (made of polyamide microfiber). When the resistance or grip feeling at the beginning of the wiping is large, it is difficult to move the eyeglass wiping cloth from a stationary state relative to the test object, making it difficult for the examiner to wipe the test object.

In addition, the examiner also evaluated dynamic slipperiness based on the largeness or smallness of resistance (dynamic slipperiness) felt while the examiner was wiping the test object with the same eyeglass wiping cloth. When the resistance during wiping is large, that is, when the dynamic slipperiness is low, it is difficult for the examiner to continue wiping the test object.

Then, the examiner evaluated tactile sensation by combining the two perspectives, and the evaluation was given as "×" when the tactile sensation was poor. The evaluation was given as "Δ" when the tactile sensation could not be said to be good. The evaluation was given as "O" when the tactile sensation was good. The evaluation was given as "⊚" when the tactile sensation was extremely good. The evaluation between "○" and "⊚" was given as "○-⊚".

The evaluations of the tactile sensation for Comparative Examples 1 to 8 were "Δ" to "○-⊚".

In contrast to these, the evaluation of the tactile sensation for Example 1 was "⊚".

For Example 1 and Comparative Examples 1 to 8, a scratch resistance test as described below was conducted to evaluate the scratch resistance (see Table 2 above).

The evaluation of the scratch resistance test was carried out by integrating the following three test items.

First, as a first scratch resistance test item, a nonwoven fabric made of 100% pure pulp ("Pure Leaf L150" manufactured by Ozu Corporation) was applied to the water absorbent layer 4 side of the test object with a load of 500 g, and the number of visible scratches was counted after 50 reciprocating cycles.

Next, as a second scratch resistance test item, chamois leather ("MICRO CHEMA WIDE" manufactured by SOFT99 Corporation) was applied to the water absorbent layer 4 side of the test object with a load of 500 g, and the number of visible scratches was counted after 50 reciprocating cycles.

Further, as a third scratch resistance test item, after the above-described chamois leather and the test object were dipped in water for five minutes in advance, the above-described chamois leather containing water by the dipping was applied to the water absorbent layer 4 side of the test object with a load of 500 g, and the number of visible scratches was counted after 50 reciprocating cycles.

The evaluation of the scratch resistance test was carried out according to the following procedure. First, each number of scratches that occurred in the above-described three test items was given an evaluation score in the following manner. That is, when the number was 11 or more, the evaluation score was 0 points. When the number was 9 or more and 10 or less, the evaluation score was 1 point. When the number was 7 or more and 8 or less, the evaluation score was 2 points. When the number was 5 or more and 6 or less, the evaluation score was 3 points. When the number was 3 or more and 4 or less, the evaluation score was 4 points. When the number was 1 or more and 2 or less, the evaluation score was 5 points. When the number was 0, the evaluation score was 6 points. Next, for each test object, an average value of the evaluation scores for the three test items was calculated. Then, it was evaluated that the higher the average value (perfect score of 6 points), the more excellent the scratch resistance of the test object.

The evaluation of the scratch resistance for Comparative Example 3 was relatively low at 3.0.

The evaluations of the scratch resistance for Comparative Examples 1, 2, 4, and 7 were from 5.0 to 5.3.

In contrast to these, the evaluations of the scratch resistance for Comparative Examples 5, 6, and 8 and Example 1 were 5.7.

For Example 1 and Comparative Examples 1 to 8, an anti-fogging test as described below was conducted to evaluate the anti-fogging property (see Table 2 above).

That is, the examiner confirmed the occurrence of fogging immediately after continuously exhaling a breath to the water absorbent layer 4 side of the test object for two seconds at a distance of about 10 mm.

When fogging was not generated on the test object, the test object was evaluated as "○". When a slight fogging was generated on a part of the test object and the fogging cleared in a short period, the test object was evaluated as "Δ". When fogging was generated immediately after a breath was exhaled, and the fogging was generated over a wide range after the breath was continuously exhaled for two seconds, the test object was evaluated as "×".

The evaluations of the anti-fogging property for Comparative Examples 2 and 3 were relatively low as "Δ".

In contrast to these, the evaluations of the anti-fogging property for Comparative Examples 1, 4 to 8 and Example 1 were "○".

For Examples 2 to 5 and Comparative Examples 9 to 11, a friction abrasion test as described below was conducted to evaluate the slipperiness (see Table 3 above).

That is, the test object was subjected to an automatic friction abrasion analyzer ("TSf-502" manufactured by Kyowa Interface Science Co., Ltd.). Cloth set on a contact part to rub against the test object was a wiper made of 100% polyester continuous fiber (clean room wiper "AS-4000D" manufactured by AS ONE CORPORATION), and one piece was affixed to the contact part with double-sided tape in a state where there was no warp. A load applied to the cloth was set to 500 g. A speed of the cloth was set to 1 mm per second. A reciprocating distance of the cloth was set to 20 mm.

The examiner measured five times per test object and treated a first measurement value as a coefficient of static friction µₛ corresponding to the grip feeling at the beginning of wiping, and the average of second to fifth measurement values as a coefficient of dynamic friction µₖ corresponding to the dynamic slipperiness during wiping.

When the coefficient of static friction µₛ is large, the resistance at the beginning of wiping is strong, making it difficult to start wiping the test object. When the coefficient of dynamic friction µₖ is large, the resistance during wiping is strong, making it difficult to continue wiping the test object.

In Comparative Example 9, the polyol compound is used without using the epoxide (C) at the time of the formation of the water absorbent layer 4, and the water repellent layer 6 is not provided. Therefore, Comparative Example 9 has a coefficient of static friction µₛ of 0.426 and a coefficient of dynamic friction µₖ of 0.099.

Comparative Example 10 is a product in which the water repellent layer 6 related to "KF-869" was added to Comparative Example 9 and has a coefficient of static friction µₛ of 0.392 and a coefficient of dynamic friction µₖ of 0.067, which are smaller than those of Comparative Example 9.

Comparative Example 11 is a product in which the water repellent layer 6 related to "KF-8021" was added to Comparative Example 9 and has a coefficient of static friction µₛ of 0.212 and a coefficient of dynamic friction µₖ of 0.026, which are smaller than those of Comparative Example 10.

In Example 2, since the water absorbent layer 4 is formed of the (meth)acrylic-based resin (A), the polyfunctional isocyanate compound (B), and the epoxide (C), Example 2 has a coefficient of static friction µₛ of 0.054 and a coefficient of dynamic friction µₖ of 0.077, which are significantly smaller than those of Comparative Example 9.

Example 3 is a product in which the water repellent layer 6 related to "KF-869" was formed on the water absorbent layer 4 similar to that of Example 2 and has a coefficient of static friction µₛ of 0.020 and a coefficient of dynamic friction µₖ of 0.012, which are smaller than those of Example 2.

Example 4 is a product in which the water repellent layer 6 related to "KF-8021" was formed on the water absorbent layer 4 similar to that of Example 2 and has a coefficient of static friction µₛ of 0.019 and a coefficient of dynamic friction µₖ of 0.009, which are smaller than those of Example 3.

Example 5 is a product in which the water repellent layer 6 related to "KF-8021" was formed after plasma treatment to the water absorbent layer 4 similar to that of Example 2 and has a coefficient of static friction µₛ of 0.010 and a coefficient of dynamic friction µₖ of 0.004, which are smaller than those of Example 4.

Unlike Comparative Examples 1 to 11, in Examples 1 to 5, since the water absorbent layer 4 was formed of the (meth)acrylic-based resin (A), the polyfunctional isocyanate compound (B), and the epoxide (C), the anti-fogging properties, the scratch resistance, and durability coexisted at a higher level. The ranges of proportions of the respective constituent units (a-1) to (a-4) in the (meth)acrylic-based resin (A) conform to those in JP 6340539 B described above.

Since the water repellent layer 6 was provided, Examples 3 to 5 had better slipperiness than Example 2. Since the water repellent layer 6 in Example 4 was formed of "KF-8021" which had a larger functional group equivalent than that of "KF-869" in Example 3, Example 4 had better slipperiness than Example 3. Since the plasma treatment, which was not performed in Example 4, was performed on the water repellent layer 6 in Example 5, Example 5 had better slipperiness than Example 4.

Separately from Examples 1 to 5, various modification examples, in which the quantity of the polyfunctional isocyanate compound (B) in Example 1 was variously changed, were produced. From the aspect of maintaining various performances at a higher level, it was confirmed that the preferable proportion of the polyfunctional isocyanate compound (B) was 5 parts by mass or more and 100 parts by mass or less relative to 100 parts by mass of the (meth)acrylic-based resin (A).

Further, separately from Examples 1 to 5, various modification examples, in which the quantity of the epoxide (C) in Example 1 was variously changed, were produced. From the aspect of maintaining various performances (in particular, adhesiveness) at a higher level, it was confirmed that the preferable proportion of the epoxide (C) was 1 part by mass or more and 10 parts by mass or less relative to 100 parts by mass of the combination of the (meth)acrylic-based resin (A) and the polyfunctional isocyanate compound (B).

In addition, separately from Examples 1 to 5, various modification examples, in which the type (functional group equivalent) of the water repellent agent in Example 2 was variously changed, were produced. From the aspect of maintaining various performances (in particular, slipperiness) at a higher level, it was confirmed that the preferable range of the functional group equivalent of the water repellent agent was 5000 or more.

## Claims

1. An anti-fogging plastic spectacle lens comprising
a water absorbent layer obtained from a composition, wherein
the composition contains:
a (meth)acrylic-based resin (A), a polyfunctional isocyanate compound (B) and an epoxide (C);
wherein the (meth)acrylic-based resin (A) has a constituent unit derived from a monomer (a-1) represented by chemical formula (1) below, a constituent unit derived from a monomer (a-2) represented by chemical formula (2) below, a constituent unit derived from a hydroxyalkyl (meth)acrylate (a-3), and a constituent unit derived from a monomer (a-4) represented by chemical formula (3) below; and
the epoxide (C) as an organic compound has a plurality of epoxy groups,
wherein a proportion of the constituent unit derived from the monomer (a-1) is 20 mass% or more and 65 mass% or less, a proportion of the constituent unit derived from the monomer (a-2) is 10 mass% or more and 40 mass% or less, and a proportion of the constituent unit derived from the monomer (a-4) is 1 mass% or more and 10 mass% or less relative to 100 mass% of all constituent units in the (meth)acrylic-based resin (A),
in chemical formula (1), R₁ is a hydrogen atom or methyl group, R₂ and R₃ are hydrogen atoms or linear or branched alkyl groups having 1 to 3 carbon atoms, and R₂ and R₃ may be identical to or different from one another,
in chemical formula (2), R₄ is a hydrogen atom or methyl group, and n₁ is an integer of 1 or more and 5 or less, and
in chemical formula (3), R₅ is a hydrogen atom or methyl group, R₆ is a divalent organic group, and n₂ is an integer of 0 or not less than 1.

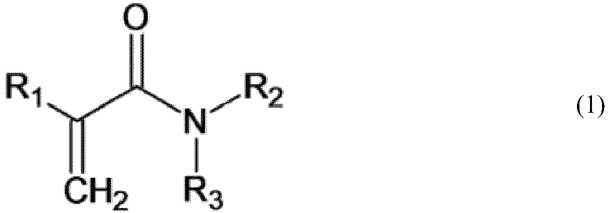

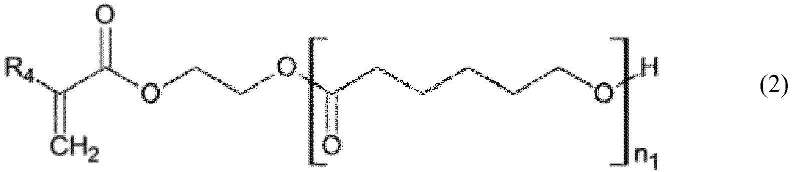

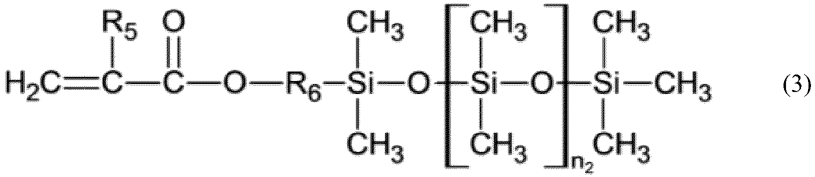

2. The anti-fogging plastic spectacle lens according to claim 1, wherein
a proportion of the polyfunctional isocyanate compound (B) is 5 parts by mass or more and 100 parts by mass or less relative to 100 parts by mass of the (meth)acrylic-based resin (A).

3. The anti-fogging plastic spectacle lens according to claim 1 or 2, wherein
the epoxide (C) is 1 part by mass or more and 10 parts by mass or less relative to 100 parts by mass of a combination of the (meth)acrylic-based resin (A) and the polyfunctional isocyanate compound (B).

4. The anti-fogging plastic spectacle lens according to any of claims 1 to 3, wherein
the epoxide (C) has one or more hydroxyl groups.

5. The anti-fogging plastic spectacle lens according to any of claims 1 to 4, further comprising
a water repellent layer containing at least one of amino-modified silicone and mercapto-modified silicone as a main component on the water absorbent layer.

6. The anti-fogging plastic spectacle lens according to claim 5, wherein,
the water repellent layer contains at least one of the amino-modified silicone and the mercapto-modified silicone having a functional group equivalent of 5000 or more as a main component.

## Patentansprüche

1. Antibeschlag-Kunststoffbrillenglas-Linse, umfassend
eine wasserabsorbierende Schicht, die aus einer Zusammensetzung erhalten ist, wobei
die Zusammensetzung enthält:
ein Harz auf (Meth-)Acrylbasis (A), eine polyfunktionelle Isocyanat-Verbindung (B) und ein Epoxid (C);
wobei das Harz auf (Meth-)Acrylbasis (A) einen Bestandteil aufweist, der von einem durch die untenstehende chemische Formel (1) dargestellten Monomer (a-1) abgeleitetet ist, einen Bestandteil, der von einem durch die untenstehende chemische Formel (2) dargestellten Monomer (a-2) abgeleitet ist, einen Bestandteil, der von einem Hydroxyalkyl(meth)acrylat (a-3) abgeleitet ist, und einen Bestandteil, der von einem durch die untenstehende chemische Formel (3) dargestellten Monomer (a-4) abgeleitet ist; und
das Epoxid (C) als eine organische Verbindung eine Mehrzahl von Epoxidgruppen aufweist,
wobei ein Anteil des vom Monomer (a-1) abgeleiteten Bestandteils 20 Massen-% oder mehr und 65 Massen-% oder weniger beträgt, ein Anteil des vom Monomer (a-2) abgeleiteten Bestandteils 10 Massen-% oder mehr und 40 Massen-% oder weniger beträgt, und ein Anteil des vom Monomer (a-4) abgeleiteten Bestandteils 1 Massen-% oder mehr und 10 Massen-% oder weniger beträgt, bezogen auf 100 Massen-% aller Bestandteile in dem Harz auf (Meth-)Acrylbasis (A),
wobei in der chemischen Formel (1) R₁ ein Wasserstoffatom oder eine Methylgruppe ist, R₂ und R₃ Wasserstoffatome oder lineare oder verzweigte Alkylgruppen mit 1 bis 3 Kohlenstoffatomen sind, und R₂ und R₃ identisch oder voneinander verschieden sein können,
in der chemischen Formel (2) R₄ ein Wasserstoffatom oder eine Methylgruppe ist, und n₁ eine ganze Zahl von mindestens 1 und höchstens 5 ist, und
in der chemischen Formel (3) R₅ ein Wasserstoffatom oder eine Methylgruppe ist, R₆ eine zweiwertige organische Gruppe ist, und n₂ eine ganze Zahl von 0 oder nicht kleiner als 1 ist.

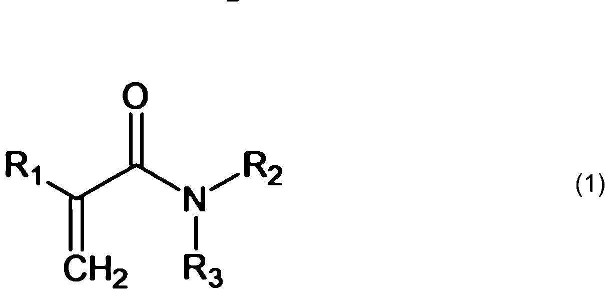

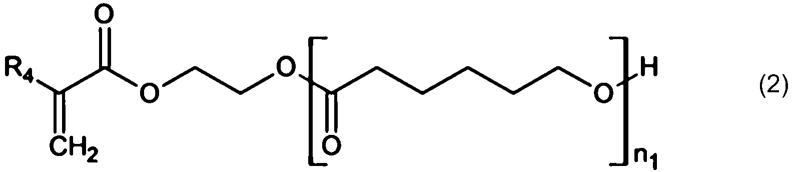

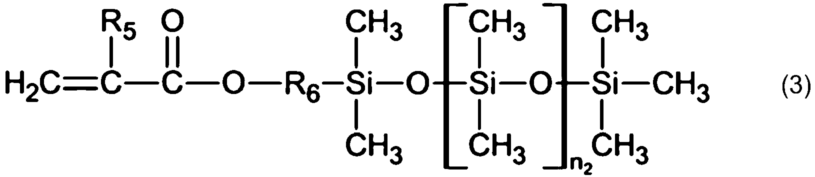

2. Antibeschlag-Kunststoffbrillenglas-Linse gemäß Anspruch 1, wobei
ein Anteil der polyfunktionellen Isocyanat-Verbindung (B) mindestens 5 Massenanteile und höchstens 100 Massenanteile beträgt, bezogen auf 100 Massenanteile des Harzes auf (Meth-)Acrylbasis (A).

3. Antibeschlag-Kunststoffbrillenglas-Linse gemäß Anspruch 1 oder 2, wobei
das Epoxid (C) mindestens 1 Massenanteile und höchstens 10 Massenanteile beträgt, bezogen auf 100 Massenanteile einer Kombination aus dem Harz auf (Meth-)Acrylbasis (A) und der polyfunktionellen Isocyanat-Verbindung (B).

4. Antibeschlag-Kunststoffbrillenglas-Linse gemäß einem der Ansprüche 1 bis 3, wobei
das Epoxid (C) eine oder mehrere Hydroxylgruppen aufweist.

5. Antibeschlag-Kunststoffbrillenglas-Linse gemäß einem der Ansprüche 1 bis 4, weiter umfassend
eine wasserabweisende Schicht, die zumindest eines von Amino-modifiziertem Silikon und Mercapto-modifiziertem Silikon als eine Hauptkomponente auf der wasserabsorbierenden Schicht enthält.

6. Antibeschlag-Kunststoffbrillenglas-Linse gemäß Anspruch 5, wobei
die wasserabweisende Schicht zumindest eines von Amino-modifiziertem Silikon und Mercapto-modifiziertem Silikon mit einem Funktionsgruppenäquivalent von 5000 oder mehr als eine Hauptkomponente enthält.

## Revendications

1. Verre de lunettes plastique antibuée comprenant
une couche absorbant l'eau obtenue à partir d'une composition, où
la composition contient :
une résine à base (méth)acrylique (A), un composé isocyanate polyfonctionnel (B) et un époxyde (C) ;
où la résine à base (méth)acrylique (A) a une unité constituante dérivée d'un monomère (a-1) représenté par la formule chimique (1) ci-dessous, une unité constituante dérivée d'un monomère (a-2) représenté par la formule chimique (2) ci-dessous, une unité constituante dérivée d'un (méth)acrylate d'hydroxyalkyle (a-3), et une unité constituante dérivée d'un monomère (a-4) représenté par la formule chimique (3) ci-dessous ; et
l'époxyde (C) en tant que composé organique a une pluralité de groupes époxy,
où une proportion de l'unité constituante dérivée du monomère (a-1) est de 20 % en masse ou plus et de 65 % en masse ou moins, une proportion de l'unité constituante dérivée du monomère (a-2) est de 10 % en masse ou plus et de 40 % en masse ou moins, et une proportion de l'unité constituante dérivée du monomère (a-4) est de 1 % en masse ou plus et de 10 % en masse ou moins par rapport à 100 % en masse de toutes les unités constituantes dans la résine à base (méth)acrylique (A),
dans la formule chimique (1), R₁ est un atome d'hydrogène ou un groupe méthyle, R₂ et R₃ sont des atomes d'hydrogène ou des groupes alkyle linéaires ou ramifiés ayant 1 à 3 atomes de carbone, et R₂ et R₃ peuvent être identiques ou différents l'un de l'autre,
dans la formule chimique (2), R₄ est un atome d'hydrogène ou un groupe méthyle, et n₁ est un entier de 1 ou plus et de 5 ou moins, et
dans la formule chimique (3), R₅ est un atome d'hydrogène ou un groupe méthyle, R₆ est un groupe organique divalent, et n₂ est un entier de 0 ou pas moins de 1.

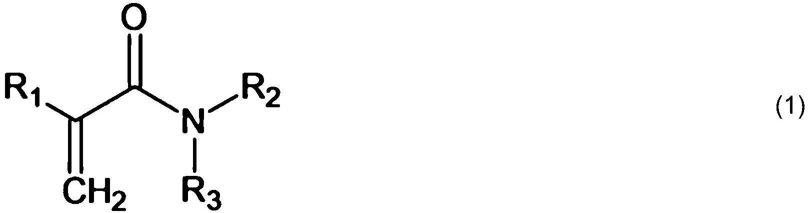

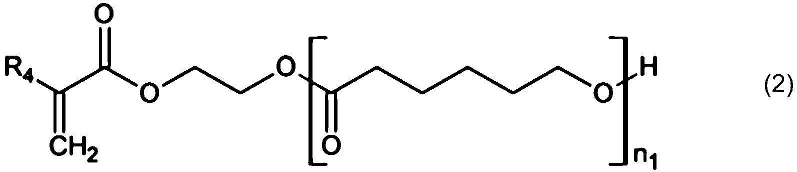

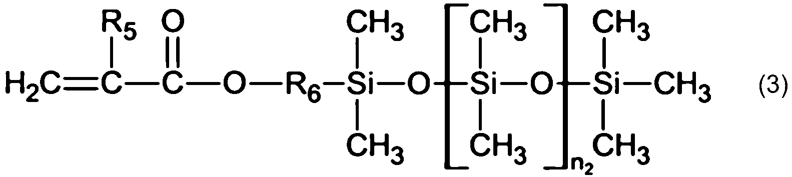

2. Verre de lunettes plastique antibuée selon la revendication 1, où
une proportion du composé isocyanate polyfonctionnel (B) est de 5 parties en masse ou plus et de 100 parties en masse ou moins par rapport à 100 parties en masse de la résine à base (méth)acrylique (A).

3. Verre de lunettes plastique antibuée selon la revendication 1 ou 2, où
l'époxyde (C) est de 1 partie en masse ou plus et de 10 parties en masse ou moins par rapport à 100 parties en masse d'une combinaison de la résine à base (méth)acrylique (A) et du composé isocyanate polyfonctionnel (B).

4. Verre de lunettes plastique antibuée selon l'une quelconque des revendications 1 à 3, où
l'époxyde (C) a un ou plusieurs groupes hydroxyle.

5. Verre de lunettes plastique antibuée selon l'une quelconque des revendications 1 à 4, comprenant en outre
une couche hydrofuge contenant au moins l'une d'une silicone amino-modifiée et d'une silicone mercapto-modifiée comme composant principal sur la couche absorbant l'eau.

6. Verre de lunettes plastique antibuée selon la revendication 5, où
la couche hydrofuge contient au moins l'une de la silicone amino-modifiée et de la silicone mercapto-modifiée ayant un équivalent de groupe fonctionnel de 5000 ou plus comme composant principal.
